# EUROPEAN PATENT SPECIFICATION

(11) **EP 3 321 158 B1**
(45) Date of publication and mention of the grant of the patent: **14.02.2024**
(21) Application number: 17191719.8
(22) Date of filing: 19.09.2017
(51) Int. Cl.: B62K 25/08, B62K 25/00, B62K 5/00, B62K 5/08, B62K 5/10, B62K 25/04, B60G 17/005, F16F 9/58, F16F 9/56, B62K 5/027, B62K 5/05

(54) **VEHICLE WHEEL AXLE STROKE LOCKING DEVICE**
FAHRZEUGRADACHSSCHLAGARRETIERUNGSVORRICHTUNG
DISPOSITIF DE VERROUILLAGE DE DÉPLACEMENT D'ESSIEU DE ROUE DE VÉHICULE

(30) Priority: 15.11.2016 TW 105137271
(43) Date of publication of application: 16.05.2018
(73) Proprietor: Kwang Yang Motor Co., Ltd., Kaohsiung City (TW)
(72) Inventor: Ting, Hsin-Chih, Cambridge, Cambridgeshire CB1 1AH (GB); Lee, Yen-Hsiu, Cambridge, Cambridgeshire CB1 1AH (GB); Huang, Pi-Sung, Cambridge, Cambridgeshire CB1 1AH (GB)
(74) Representative: Horak, Michael

(56) References cited:
- EP-A1- 1 561 612
- EP-A1- 1 571 016
- EP-A1- 2 829 423
- CN-U- 201 670 311

## Description

### (a) Technical Field of the Invention

The present invention relates generally to a wheel axle stroke locking device of a vehicle, and more particularly to a vehicle wheel axle stroke locking device that prevents the occurrence of the shortcoming of a two-front-wheeled vehicle that is easy to tip over.

### (b) Description of the Prior Art

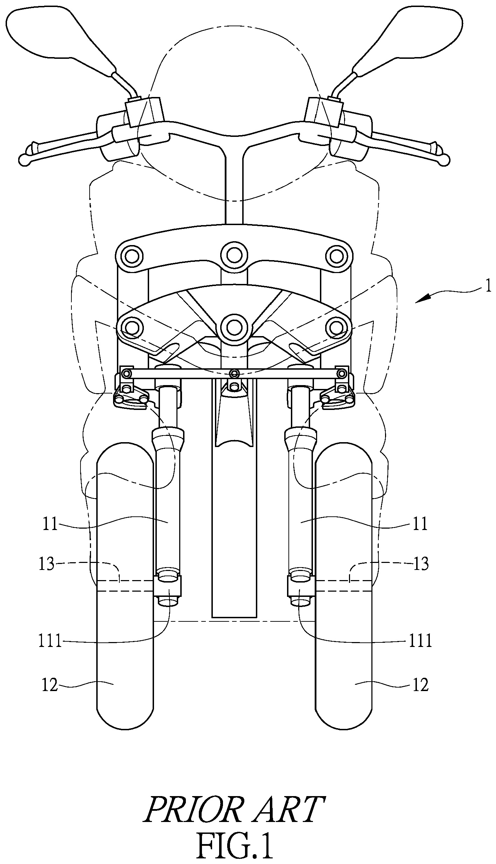

As shown in FIG 1, a vehicle 1 that comprises two front wheels are provided, in a front end thereof, with a pair of front fork units 11 respectively arranged on left and right sides. The front fork units 11 each have a lower end that is formed with a wheel axle pivotal coupling section 111. The two front wheels 12 are rotatably mounted, by means of wheel axles 13, to the wheel axle pivotal coupling sections 111 so that the two front wheels 12 are each rotatable about a center defined by the wheel axle 13.

However, when the vehicle 1 is not moving or is parked such that the vehicle 1 inclines toward one side due to one leg of a rider being positioned on the ground, one front fork unit 11 of the pair of left and right front fork units 11 undergoes compression and contracting, while the other one the front fork units 11 is not compressed. The wheel axle 13 of the un-compressed front fork unit 11 would displace in an upward direction of the vehicle body, through a stroke, with respect to the wheel axle 13 of the compressed front fork unit 11. The wheel axle 13 that undergoes the displacement stroke would make the vehicle 1 inclining further in the compressed side and in the worst situation, the vehicle 1 may tip over.

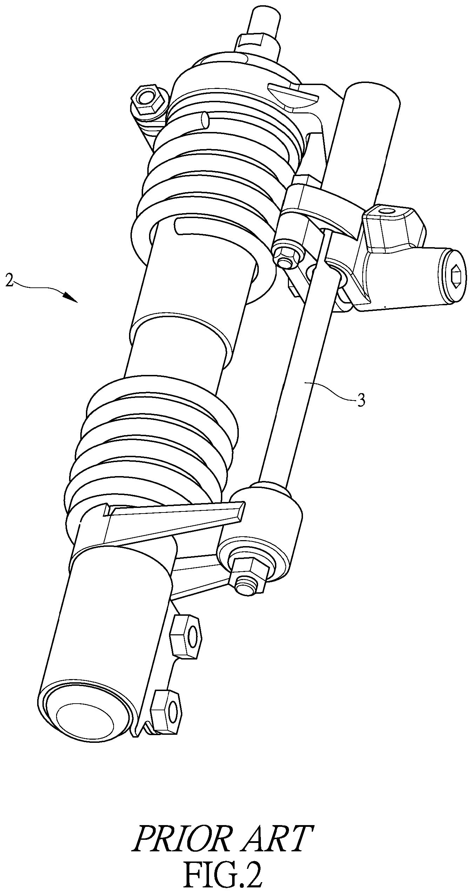

As shown in FIG 2, to overcome the above problem, Taiwanese Patent TWI13054 discloses a stroke stopping device 3 arranged at one side of the front fork unit 2. The arrangement of the stroke stopping device 3 limits the stroke that the front fork unit 2 may undergo so as to prevent the potential risk that the vehicle 1 may tip over. The Taiwanese Patent, TWI346054, is effective in eliminating the concern that a vehicle 1 having two front wheels may tip over in parking or not in movement. However, the stroke stopping device 3 is structured such that a lower end thereof is integrally connected to a lower end of the front fork unit 2 so that general application of such a front fork unit 2 and the stroke stopping device 3 is limited. The Taiwanese Patent TWI346054 requires the stroke stopping device 3 be arranged in pair, as a left one and a right one, respectively on two outer sides of the front wheels and this results in an increase of the width of a vehicle as taught in the Taiwanese Patent TWI346054.

Thus, it is now a challenge of the two-front-wheeled vehicle manufacturers to provide a vehicle wheel axle stroke locking device, which, on the one hand, prevents the occurrence of tipping of the vehicle and, on the other hand, help improve universal applicability of the front fork unit.

Prior art documents that disclose technical solutions in respect of the above-discussed issues are known, such as EP 1 571 016 A1, EP 2 829 423 A1, and EP 1 561 612 A1. These prior art documents teach a movement constraining member is coupled between two parts of a front fork unit that are movable relative to each other so that the movement constraining member may constrain the relative movement between the two parts of the front fork unit. EP 2 829 423 A1 discloses the following features of claim 1; a wheel axle stroke locking device of a vehicle, wherein the vehicle comprises at least a front fork support seat, a front fork unit having an upper end mounted to the front fork support seat, a front wheel rotatably mounted to a lower end of the front fork unit by means of a wheel axle, the front wheel being arranged in pair, comprising a left front wheel and a right front wheel respectively on left and right sides, and a wheel axle stroke locking device having an upper end coupled to the front fork support seat and a lower end coupled to the lower end of the front fork unit, wherein the wheel axle stroke locking device is located between the left front wheel and the right front wheel of the front wheels; the wheel axle stroke locking device comprises a first connector, a second connector, and a movement constraining member, the first connector comprising a guide rod, the guide rod extending from the first connector in a direction toward the front fork support seat, the first connector having a lower end indirectly mounted to the wheel axle; the second connector has an upper end that is mounted to the front fork support seat, the guide rod extending in the second connector; the movement constraining member is coupled to the second connector, the movement constraining member receiving extension of the guide rod of the first connector therethrough and operable to constrain sliding movement of the guide rod; the front fork unit comprises a first assembly and the first assembly has a lower end that is provided with a wheel axle pivotal coupling section and the wheel axle pivotal coupling section is arranged to receive the wheel axle to rotatably mount thereto; a lower end of the first connector is provided, on one side thereof, with a connection section and the connection section is indirectly coupled, together with the wheel axle, to the wheel axle pivotal coupling section of the first assembly of the front fork unit; the guide rod extends from the first connector in a direction toward the front fork support seat and the guide rod is located in front of the front fork unit; a lower end of the guide rod being rotatably mounted, via a pivot shaft, to the first connector.

### SUMMARY OF THE INVENTION

The primary objective of the present invention is to provide a wheel axle stroke locking device of a vehicle that helps overcome the shortcoming of a potential risk that a conventional vehicle having two front wheels is easy to tip over.

Thus, the primary technical solution provided in appended claims 1 - 5 is to provide a wheel axle stroke locking device of a vehicle.

The efficacy of the present invention that is achieved with the technical solution provided in claim 1 is that with the arrangement of a wheel axle stroke locking device between the front fork support seat and the wheel axle, the wheel axle stroke locking device is operable to constrain a stroke of displacement of the wheel axle so as to provide an effect of positioning that ensures stable stopping or parking of the vehicle thereby eliminating the concern of tipping of the vehicle. Also, the first connector and the second connector of the wheel axle stroke locking device can be changed readily within the scope of the appended claims so that universal applicability of the front fork unit or the wheel axle stroke locking device is enhanced to thereby improving design flexibility of the vehicle.

The efficacy of the present invention that is achieved with the technical solution provided in claim 2 is that with the guide barrel section receiving extension of the guide rod therethrough, the guide rod is allowed to slide freely in the guide barrel section so as to provide the guide rod with an effect of positioning during sliding.

The efficacy of the present invention that is achieved with the technical solution provided in claim 3 is that the front fork unit comprises a first assembly and a second assembly, wherein the first assembly comprises a shock absorber comprising a damper and a spring and the second assembly is an extendible/retractable assembly that does not comprises a damper and a spring so that the cost of the front fork unit can be reduced.

The efficacy of the present invention that is achieved with the technical solution provided in claim 4 is that when viewed from a lateral side, the first assembly has a bottom that is not lower than a bottom of the second assembly so as to maintain a distance of the first assembly from the ground to prevent the first assembly from be damaged due to collision.

The efficacy of the present invention that is achieved with the technical solution provided in claim 5 is that the movement constraining member is formed of a hydraulic brake caliper so as to provide a braking power of the movement constraining member.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

### BRIEF DESCRIPTION OF THE DRAWINGS

FIG 1 is a front view showing a preferred a conventional vehicle having two front wheels.
FIG 2 is a perspective view illustrating Taiwanese Patent TWI346054.
FIG 3 is a front view showing a vehicle according to the present invention.
FIG. 4 is a wheel axle stroke locking device of the vehicle according to the present invention.
FIG. 5 is an enlarged view of a second connector and a movement constraining member according to the present invention.
FIG. 6 is an enlarged view of a first connector according to the present invention.
FIG. 7 is a cross-sectional view of a wheel axle according to the present invention.
FIG. 8 is a schematic view illustrating a wheel axle stroke of the vehicle according to the present invention.
FIG. 9 is a schematic view illustrating operation of the wheel axle stroke locking device of the vehicle according to the present invention.

### DETAILED DESCRIPTION OF THE PREFERRED EMBODIMENTS

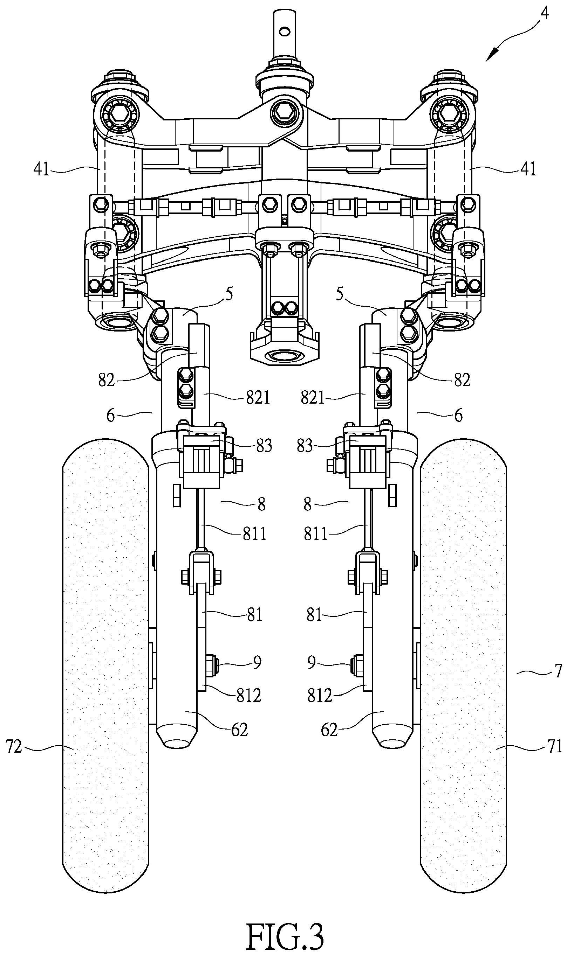

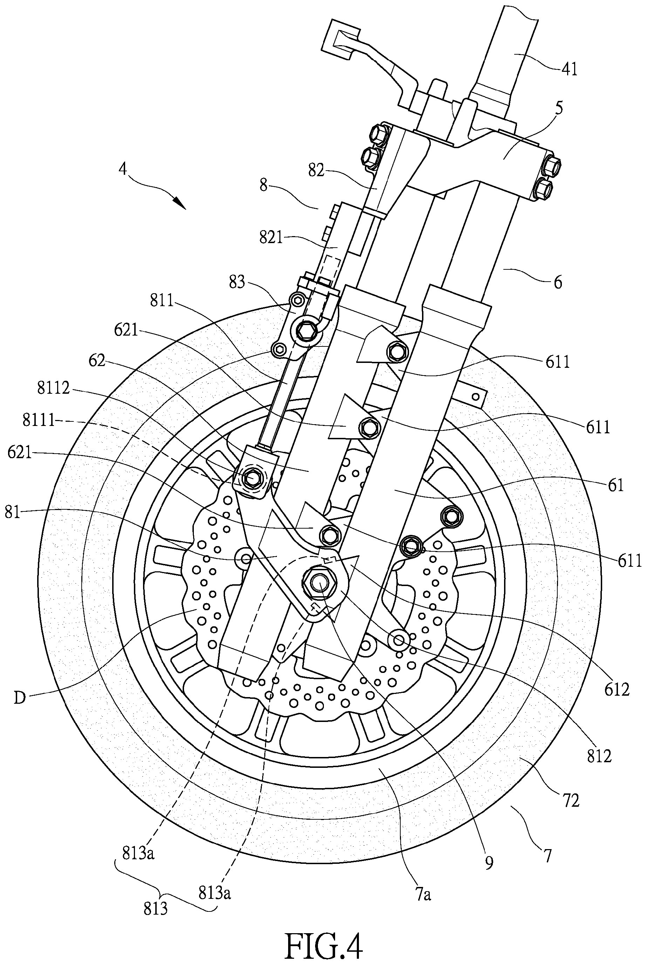

As shown in FIGS. 3 and 4, a vehicle 4 comprises, at least, a front fork support seat 5, a front fork unit 6 having an upper end supported on the front fork support seat 5, a front wheel 7 rotatably mounted to a lower end of the front fork unit 6, and a wheel axle stroke locking device 8 having an upper end coupled to the front fork support seat 5 and a lower end coupled to the lower end of the front fork unit 6. The front wheel 7 is arranged in pair, comprising a left front wheel 71 and a right front wheel 72 respectively on left and right sides. The front wheel 7 comprises a hub 7a.

As shown in FIGS. 3 and 4, the front fork support seat 5 is mounted to a front side of a vehicle body of the vehicle 4. The front fork support seat 5 has an upper end coupled to a steering mechanism 41 of the vehicle 4. The front fork support seat 5 is securely mounted to a pair of the front fork units 6, respectively on the left and right sides, and one front fork unit 6 is shown in the drawings.

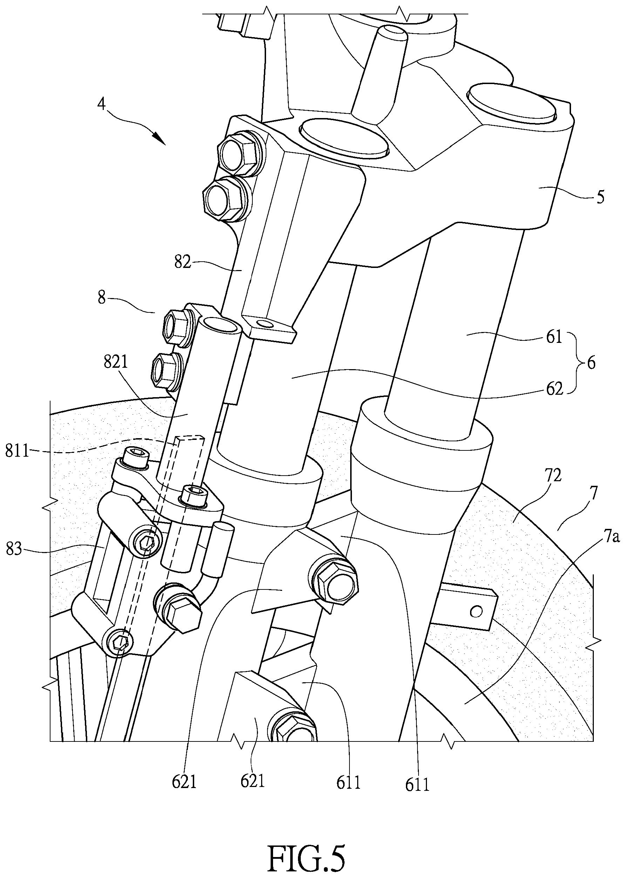

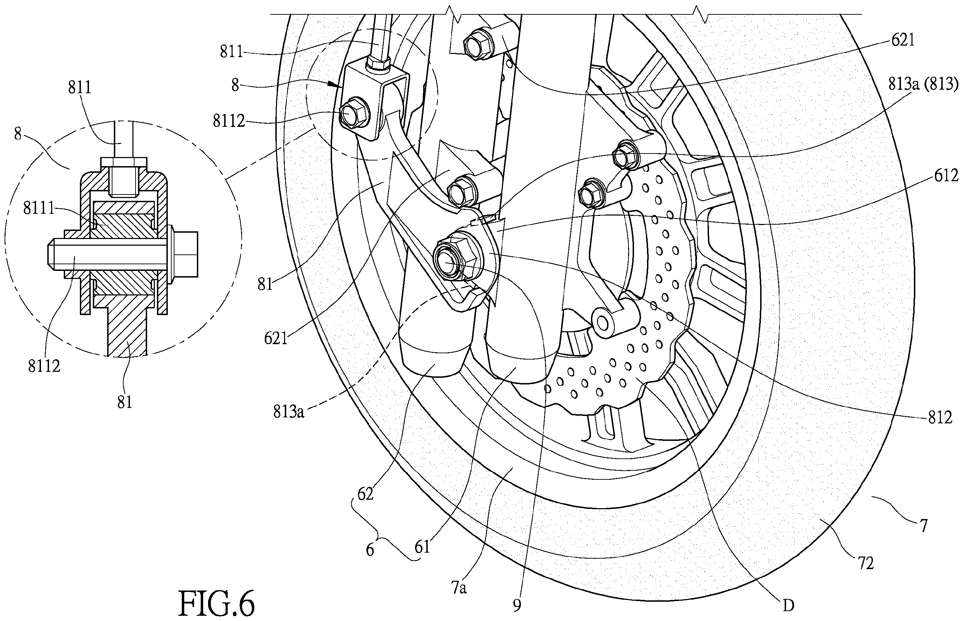

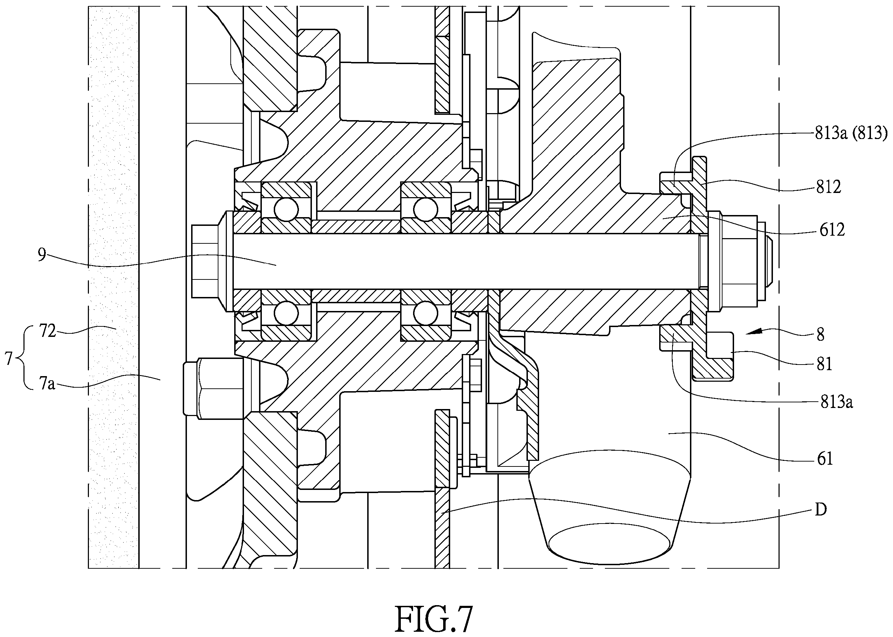

As shown in FIGS. 4, 5, 6, and 7, the upper end of the front fork unit 6 is coupled to the front fork support seat 5. The front fork unit 6 comprises a first assembly 61 and a second assembly 62. The first assembly 61 comprises a shock absorber that comprises a damper and a spring. The second assembly 62 is an assembly that does not include a damper and a spring but is extendable and retractable. The first assembly 61 and the second assembly 62 are each provided with a plurality of coupling lugs 611, 621 projecting therefrom so that through securely fixing the coupling lugs 611, 621, the first assembly 61 and the second assembly 62 are securely fixed and connected to each other, and the second assembly 62 is extendible and retractable in synchronization with the first assembly 61. The first assembly 61 has a lower end that is provided with a wheel axle pivotal coupling section 612. The wheel axle pivotal coupling section 612 is arranged to receive a wheel axle 9 to rotatably mount thereto. The wheel axle 9 receives a front wheel 7 to rotatably mount thereto. The front wheel 7 is allowed to rotate about a center defined by the wheel axle 9. The front wheel 7 and the wheel axle pivotal coupling section 612 are provided therebetween with a disc brake system **D.** As viewed from a lateral side of the vehicle body, a bottom of the first assembly 61 is not lower than a bottom of the second assembly 62 in order to maintain a distance of the first assembly 61 from the ground and thus helping prevent the first assembly 61 from be damaged with collision thereby improving the service life of the first assembly 61.

As shown in FIGS. 3, 4, 5, 6, 7, and 9, the wheel axle stroke locking device 8 is located between the left front wheel 71 and the right front wheel of the front wheel 7 in order to prevent enlargement of the front portion of the vehicle 4. The wheel axle stroke locking device 8 comprises a first connector 81, a second connector 82, and a movement constraining member 83. The first connector 81 comprises a guide rod 811. The guide rod 811 extends from the first connector 81 in a direction toward the front fork support seat 5 and the guide rod 811 is located in front of the front fork unit 6. A shock reduction sleeve 8111 is arranged at connection between the first connector 81 and the guide rod 811. A lower end of the guide rod 811 is rotatably mounted, via a pivot shaft 8112, to the first connector 81. The shock reduction sleeve 8111 is sleeved over the pivot shaft 8112. The pivot shaft 8112 is located in an outer circumferential range of the hub 7a of the front wheel 7. A lower end of the first connector 81 is provided, on one side thereof, with a connection section 812. The connection section 812 is coupled, together with the wheel axle 9, to the wheel axle pivotal coupling section 612 of the first assembly 61 of the front fork unit 6. More specifically, the wheel axle 9 is arranged to extend through both the connection section 812 and the wheel axle pivotal coupling section 612, so that the wheel axle 9 is rotatably mounted to the connection section 812 and the wheel axle pivotal coupling section 612, namely the lower end of the first connector 81 is mounted to the wheel axle 9. The connection section 812 of the first connector 81 is provided with a positioning section 813, and the positioning section 813 can be made up of positioning blocks 813a, so that the positioning section 813 provides the first connector 81 with a stable positioning effect on the wheel axle pivotal coupling section 612 of the first assembly 61 and also facilitates easy assembly of the first connector 81 so as to eliminate the shortcoming of undesired positional shift of the first connector 81 after being assembled.

As shown in FIGS. 3, 4, and 5, the second connector 82 has an upper end that is fixed to the front fork support seat 5. The second connector 82 is provided, in a direction toward the first connector 81, with a guide barrel section 821. The guide barrel section 821 receives extension of the guide rod 811 of the first connector 81 therethrough and the guide rod 811 is slidable in the guide barrel section 821. Also, the guide barrel section 821 provides an effect of guiding and positioning of an upper end of the guide rod 811. The second connector 82 has a lower end coupled to the movement constraining member 83, and more specifically, the movement constraining member 83 is arranged on a lower end of the guide barrel section 821 of the second connector 82.

As shown in FIGS. 3, 4, and 5, the movement constraining member 83 is coupled to the second connector 82. The movement constraining member 83 can be a hydraulic brake caliper. The movement constraining member 83 receives the guide rod 811 of the first connector 81 to extend therethrough and the movement constraining member 83 is controlled for operation b y a control knob (not shown) so that the movement constraining member 83 may carry out a braking operation on the guide rod 811 of the first connector 81. In other words, when the movement constraining member 83 is operated to carry out braking on the guide rod 811 of the first connector 81, the guide rod 811 is not allowed to slide in the guide barrel section 821.

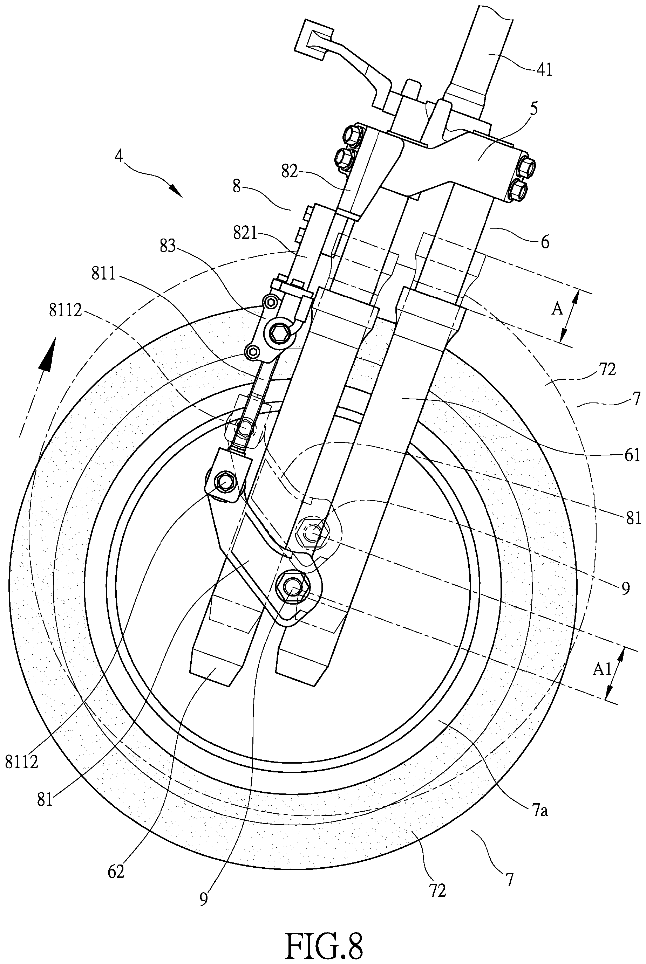

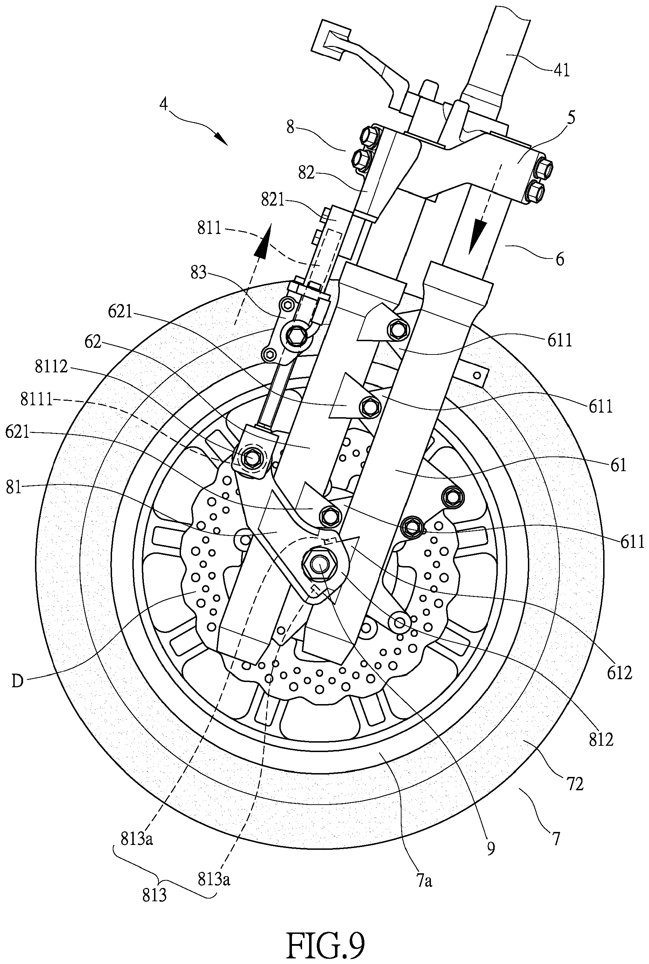

As shown in FIGS. 8 and 9, when the vehicle 4 cruises, the front fork unit 6 would need to absorb shocks induced by terrain, wherein the first assembly 61 of the front fork unit 6 due to the damper and the spring included therein provides an effect of shock absorption so that the front fork unit 6, as a consequence of shock absorption, undergoes a front fork unit shock absorption stroke **A,** and the wheel axle 9 synchronously takes a wheel axle stroke **A1** of the same displacement, meaning the front fork unit shock absorption stroke **A** and the wheel axle stroke **A1** are identical. Under such a condition, the guide rod 811 of the first connector 81 of the wheel axle stroke locking device 8 moves in synchronization with the movement of the front fork unit 6, meaning the guide rod 811 slides in the guide barrel section 821 in an up-down direction of the vehicle body so that an effect of shock absorption is induced for the vehicle 4.

As shown in FIGS. 3 and 4, when the vehicle 4 stops or is parked, the rider may operate the control knob to put the movement constraining member 83 of the wheel axle stroke locking device 8 into operation so that the movement constraining member 83 applies a braking force to the guide rod 811 of the first connector 81 to thereby constrain the sliding movement of the guide rod 811. When the guide rod 811 is constrained from sliding or fixed by the movement constraining member 83, since the connection section 812 of the first connector 81 of the wheel axle stroke locking device 8 is mounted to the wheel axle 9, the wheel axle 9 is constrained by the wheel axle stroke locking device 8 from making a displacement in the up-down direction of the vehicle body and thus, the front fork unit 6 is prevented from extension and retraction, whereby an effect of stable stopping or parking of the vehicle 4 can be achieved to eliminate the concern of tipping of the vehicle 4.

## Claims

1. A vehicle comprising a wheel axle stroke locking device, wherein the vehicle (4) comprises at least a front fork support seat (5), a front fork unit (6) having an upper end mounted to the front fork support seat (5), a front wheel (7) rotatably mounted to a lower end of the front fork unit (6) by means of a wheel axle (9), the front wheel (7) being arranged in pair, comprising a left front wheel (71) and a right front wheel (72) respectively on left and right sides, and a wheel axle stroke locking device (8) having an upper end coupled to the front fork support seat (5) and a lower end coupled to the lower end of the front fork unit (6), wherein the wheel axle stroke locking device (8) is located between the left front wheel (71) and the right front wheel (72) of the front wheels (7); the wheel axle stroke locking device (8) comprises a first connector (81), a second connector (82), and a movement constraining member (83), the first connector (81) comprising a guide rod (811), the guide rod (811) extending from the first connector (81) in a direction toward the front fork support seat (5), the first connector (81) having a lower end directly mounted to the wheel axle (9); the second connector (82) has an upper end that is mounted to the front fork support seat (5), the guide rod (811) extending in the second connector (82); the movement constraining member (83) is coupled to the second connector (82), the movement constraining member (83) receiving extension of the guide rod (811) of the first connector (81) therethrough and operable to constrain sliding movement of the guide rod (811); the front fork unit (6) comprises a first assembly (61) and a second assembly (62) and the first assembly (61) has a lower end that is provided with a wheel axle pivotal coupling section (612) and the wheel axle pivotal coupling section (612) is arranged to receive the wheel axle (9) to rotatably mount thereto; a lower end of the first connector (81) is provided, on one side thereof, with a connection section (812) and the connection section (812) is directly coupled, together with the wheel axle (9), to the wheel axle pivotal coupling section (612) of the first assembly (61) of the front fork unit (6); the guide rod (811) extends from the first connector (81) in a direction toward the front fork support seat (5) and the guide rod (811) is located in front of the front fork unit (6); a shock reduction sleeve (8111) is arranged at connection between the first connector (81) and the guide rod (811), a lower end of the guide rod (811) being rotatably mounted, via a pivot shaft (8112), to the first connector (81), the shock reduction sleeve (8111) being sleeved over the pivot shaft (8112), the pivot shaft (8112) being located in an outer circumferential range of the hub (7a) of the front wheel (7); the connection section (812) of the first connector (81) is provided with a positioning section (813), and the positioning section (813) is made up of positioning blocks (813a).

2. according to claim 1, wherein the second connector (82) comprises a guide barrel section (821), the guide barrel section (821) receiving extension of the guide rod (811) therethrough, the guide rod (811) being slidable in the guide barrel section (821).

3. The vehicle according to claim 1, wherein the first assembly (61) comprises a shock absorber that comprises a damper and a spring, the second assembly comprising an assembly that does not include a damper and a spring and is extendible and retractable.

4. The vehicle according to claim 3, wherein when viewed from a lateral side, the first assembly (61) has a bottom that is not lower than a bottom of the second assembly (62).

5. The vehicle according to claim 1, wherein the movement constraining member (83) comprises a hydraulic brake caliper.

## Patentansprüche

1. Fahrzeug mit einer Radachsen-Hubverriegelungsvorrichtung wobei das Fahrzeug (4) mindestens einen Vordergabel-Trägersitz (5) umfasst, eine Vordergabeleinheit (6) mit einem oberen Ende, das an dem Vordergabel-Trägersitz (5) angebracht ist, ein Vorderrad (7), das drehbar an einem unteren Ende der vorderen Gabeleinheit (6) mittels einer Radachse (9) angebracht ist, wobei das Vorderrad (7), das paarweise angeordnet ist, ein linkes Vorderrad (71) und ein rechtes Vorderrad (72) auf der linken bzw. rechten Seite umfasst, und wobei eine Radachsen-Hubverriegelungsvorrichtung (8) ein oberes Ende, das mit dem Vordergabel-Trägersitz (5) verbunden ist, und ein unteres Ende aufweist, das mit dem unteren Ende der vorderen Gabeleinheit (6) verbunden ist, wobei sich die Radachsen-Hubverriegelungsvorrichtung (8) zwischen dem linken Vorderrad (71) und dem rechten Vorderrad (72) der Vorderräder (7) befindet; wobei die Radachsen-Hubverriegelungsvorrichtung (8) ein erstes Verbindungsstück (81), ein zweites Verbindungsstück (82) und ein Bewegungsbegrenzungselement (83) umfasst, wobei das erste Verbindungsstück (81) eine Führungsstange (811) umfasst, wobei sich die Führungsstange (811) von dem ersten Verbindungsstück (81) in Richtung des Vordergabel-Trägersitzes (5) erstreckt, wobei das erste Verbindungsstück (81) ein unteres Ende aufweist, das direkt an der Radachse (9) angebracht ist; das zweite Verbindungsstück (82) weist ein oberes Ende auf, das an dem Vordergabel-Trägersitz (5) angebracht ist, wobei sich die Führungsstange (811) in dem zweiten Verbindungsstück (82) erstreckt; das Bewegungsbegrenzungselement (83) ist mit dem zweiten Verbindungsstück (82) verbunden, wobei das Bewegungsbegrenzungselement (83) die Verlängerung der Führungsstange (811) des ersten Verbindungsstücks (81) durch dieses hindurch aufnimmt und betätigbar ist, um die Gleitbewegung der Führungsstange (811) einzuschränken; die vordere Gabeleinheit (6) umfasst eine erste Anordnung (61) und eine zweite Anordnung (62) und die erste Anordnung (61) weist ein unteres Ende auf, das mit einem Radachsen-Schwenkkupplungsabschnitt (612) versehen ist und der Radachsen-Schwenkkupplungsabschnitt (612) so angeordnet ist, dass er die Radachse (9) aufnimmt, um sich drehbar daran zu befestigen; ein unteres Ende des erstes Verbindungsstücks (81) ist an einer Seite desselben mit einem Verbindungsabschnitt (812) versehen und der Verbindungsabschnitt (812) ist zusammen mit der Radachse (9) direkt mit dem Radachsen-Schwenkkupplungsabschnitt (612) der ersten Anordnung (61) der vorderen Gabeleinheit (6) verbunden; die Führungsstange (811) erstreckt sich von dem ersten Verbindungsstück (81) in Richtung des Vordergabel-Trägersitzes (5) und die Führungsstange (811) befindet sich gegenüber der vorderen Gabeleinheit (6); eine Stoßdämpfungshülse (8111) ist an der Verbindung zwischen dem ersten Verbindungsstück (81) und der Führungsstange (811) angeordnet, wobei ein unteres Ende der Führungsstange (811) drehbar an einem ersten Verbindungsstück (81) mittels einer Drehachse (8112) angebracht ist, wobei die Stoßdämpfungshülse (8111) über die Drehachse (8112) gestülpt ist, wobei die Drehachse (8112) in einem äußeren Umfangsbereich der Nabe (7a) des Vorderrades (7) angeordnet ist; der Verbindungsabschnitt (812) des erstes Verbindungsstücks (81) ist mit einem Positionierungsabschnitt (813) versehen, und der Positionierungsabschnitt (813) besteht aus Positionierungsblöcken (813a).

2. Fahrzeug nach Anspruch 1, wobei das zweite Verbindungsstück (82) einen Führungsrohrabschnitt (821) umfasst, wobei der Führungsrohrabschnitt (821) die Verlängerung der Führungsstange (811) durch ihn hindurch aufnimmt, wobei die Führungsstange (811) in dem Führungsrohrabschnitt (821) verschiebbar ist.

3. Fahrzeug nach Anspruch 1, wobei die erste Anordnung (61) einen Stoßdämpfer umfasst, der einen Dämpfer und eine Feder umfasst, wobei die zweite Anordnung eine Anordnung umfasst, die keinen Dämpfer und keine Feder umfasst und aus- und einfahrbar ist.

4. Fahrzeug nach Anspruch 3, wobei die erste Anordnung (61), von einer Seitenwand gesehen, einen Boden aufweist, der nicht niedriger als ein Boden der zweiten Anordnung (62) ist.

5. Fahrzeug nach Anspruch 1, wobei das Bewegungsbegrenzungselement (83) einen hydraulischen Bremssattel umfasst.

## Revendications

1. Véhicule comprenant un dispositif de verrouillage de déplacement d'essieu de roue, où le véhicule (4) comprend au moins un logement de support de fourche avant (5), une unité de fourche avant (6) ayant une extrémité supérieure montée sur le logement de support de fourche avant (5), une roue avant (7) montée de façon rotative à une extrémité inférieure de l'unité de fourche avant (6) au moyen d'un essieu de roue (9), la roue avant (7) étant agencée en paire, comprenant une roue avant gauche (71) et une roue avant droite (72) respectivement sur les côtés gauche et droit, et un dispositif de verrouillage de déplacement d'essieu de roue (8) ayant une extrémité supérieure couplée au logement de support de fourche avant (5) et une extrémité inférieure couplée à l'extrémité inférieure de l'unité de fourche avant (6), où le dispositif de verrouillage de déplacement d'essieu de roue (8) est situé entre la roue avant gauche (71) et la roue avant droite (72) des roues avant (7); le dispositif de verrouillage de déplacement d'essieu de roue (8) comprend un premier connecteur (81), un deuxième connecteur (82) et un élément de limitation de mouvement (83), le premier connecteur (81) comprenant une tige de guidage (811), la tige de guidage (811) s'étendant du premier connecteur (81) dans une direction vers le siège de support de fourche avant (5), le premier connecteur (81) ayant une extrémité inférieure directement montée sur l'essieu de roue (9) ; le deuxième connecteur (82) a une extrémité supérieure qui est montée sur le logement de support de fourche avant (5), la tige de guidage (811) s'étendant dans le deuxième connecteur (82) ; l'élément de limitation de mouvement (83) est couplé au deuxième connecteur (82), l'élément de limitation de mouvement (83) recevant l'extension de la tige de guidage (811) du premier connecteur (81) à travers celui-ci et utilisable pour contraindre le mouvement coulissant de la tige de guidage (811) ; l'unité de fourche avant (6) comprend un premier ensemble (61) et un deuxième ensemble (62) et le premier ensemble (61) a une extrémité inférieure qui est pourvue d'une section d'accouplement pivotant d'essieu de roue (612) et la section d'accouplement pivotant d'essieu de roue (612) est agencée pour recevoir l'essieu de roue (9) pour y être monté de façon rotative; une extrémité inférieure du premier connecteur (81) est pourvue, sur un côté de celui-ci, d'une section de connexion (812) et la section de connexion (812) est directement couplée, avec l'essieu de roue (9), à la section d'accouplement pivotant d'essieu de roue (612) du premier ensemble (61) de l'unité de fourche avant (6); la tige de guidage (811) s'étend du premier connecteur (81) dans une direction vers le logement de support de fourche avant (5) et la tige de guidage (811) est située devant l'unité de fourche avant (6) ; une douille de réduction de choc (8111) est agencée à la connexion entre le premier connecteur (81) et la tige de guidage (811), une extrémité inférieure de la tige de guidage (811) étant montée de façon rotative, via un arbre de pivot (8112), au premier connecteur (81), la douille de réduction de choc (8111) étant gainée sur l'arbre de pivot (8112), l'arbre de pivot (8112) étant situé dans une portée circonférentielle externe du moyeu (7a) de la roue avant (7) ; la section de connexion (812) du premier connecteur (81) est pourvue d'une section de positionnement (813), et la section de positionnement (813) est composée de blocs de positionnement (813a).

2. Véhicule selon la revendication 1, où le deuxième connecteur (82) comprend une section de canon de guidage (821), la section de canon de guidage (821) recevant une extension de la tige de guidage (811) à travers elle, la tige de guidage (811) étant coulissante dans la section de canon de guidage (821).

3. Véhicule selon la revendication 1, où le premier ensemble (61) comprend un amortisseur qui comprend un amortisseur et un ressort, le deuxième ensemble comprenant un ensemble qui ne comprend pas un amortisseur et un ressort et est extensible et rétractable.

4. Véhicule selon la revendication 3, où, vu d'un côté latéral, le premier ensemble (61) a un fond qui n'est pas plus bas qu'un fond du deuxième ensemble (62).

5. Véhicule selon la revendication 1, où l'élément de contrainte de mouvement (83) comprend un étrier de frein hydraulique.
